# FASCICULE DE BREVET EUROPEEN

(11) **EP 2 906 822 B1**
(45) Date de publication et mention de la délivrance du brevet: **11.07.2018**
(21) Numéro de dépôt: 13773768.0
(22) Date de dépôt: 08.10.2013
(51) Int. Cl.: F03D 3/06, F03D 3/02, F03D 7/06

(54) **ÉOLIENNE À AXE VERTICAL**
WINDTURBINE MIT VERTIKALER ACHSE
VERTICAL AXIS WIND TURBINE

(30) Priorité: 10.10.2012 FR 1259673
(43) Date de publication de la demande: 19.08.2015
(73) Titulaire: Panipa, 75008 Paris (FR)
(72) Inventeur: Thomas, Pierre Armand, 92800 Puteaux (FR)
(74) Mandataire: Lavoix
(86) Numéro de dépôt international: PCT/EP2013/070888
(87) Numéro de publication internationale: WO 2014/056875

(56) Documents cités:
- WO-A1-2009/082352
- WO-A2-2010/063131
- US-A- 4 365 934
- US-A- 4 618 312
- US-A1- 2003 235 498
- US-A1- 2010 301 609

## Description

La présente invention concerne un dispositif de conversion d'une énergie éolienne, c'est-à-dire l'énergie cinétique du vent, en une énergie d'une autre nature, notamment une énergie mécanique et/ou électrique.

On connaît déjà, dans l'état de la technique, voir par exemple US 4 618 312, un dispositif de conversion de l'énergie éolienne en énergie électrique. Un tel dispositif est généralement appelé « éolienne ». Ce dispositif connu comporte un mât, et un rotor muni de pales monté au sommet du mât.

Le rotor est entrainé en rotation par l'énergie cinétique du vent. En d'autres termes, l'énergie éolienne applique un couple au rotor.

Par ailleurs, le rotor est cinématiquement relié à un convertisseur de l'énergie du couple appliqué à ce rotor, en une énergie mécanique ou électrique.

Du fait de la structure du rotor à pales, le flux de vent entraînant ces pales en rotation est fortement perturbé. Il n'est donc pas possible d'agencer plusieurs éoliennes trop proches les unes des autres, un flux de vent perturbé par une éolienne ne pouvant être utilisé pour entraîner le rotor d'une autre éolienne en rotation.

Par ailleurs, il apparaît qu'une telle éolienne ne peut être utilisée que pendant une plage de temps limitée à 2800 heures environs.

L'invention a notamment pour but de remédier à ces inconvénients, en fournissant un dispositif de conversion d'énergie éolienne impliquant peu de perturbations du flux de vent, pouvant être utilisée sur une plage de temps augmentée, le tout en présentant un rendement optimal.

A cet effet, l'invention a notamment pour objet un dispositif de conversion d'énergie éolienne en une énergie d'une autre nature, caractérisé en ce qu'il comporte :
- une embase,
- un mât creux, monté sur l'embase, s'étendant le long d'un axe sensiblement vertical,
- au moins un module de forme générale de révolution autour d'un axe, disposé coaxialement autour du mât, et mobile en rotation autour de ce mât, ledit module comprenant :
   o au moins un volet s'étendant entre une extrémité liée par une liaison pivot, et une extrémité libre, ledit volet étant déplaçable autour de la liaison pivot entre une position rétractée et une position déployée,
   o des moyens de déplacement du volet entre ses positions déployée et rétractée, en fonction de la position angulaire de ce volet autour du mât, lesdits moyens de déplacement étant désactivables,
- un arbre, disposé dans le mât creux coaxialement au module, lié en rotation avec ce module autour dudit axe, et coopérant avec un convertisseur de l'énergie mécanique de rotation de l'arbre) en ladite énergie de l'autre nature.

En indexant la position du volet, entre ses positions déployée ou rétractée, sur la position angulaire de ce volet autour du mât, il est possible de n'ouvrir ce volet que lorsqu'il est en prise avec le vent, et de le refermer lorsqu'il se déplace contre le vent. Ainsi, on ne perd pas d'énergie par des volets avançant contre le vent, si bien qu'on améliore le rendement du dispositif de conversion.

En outre, puisque seuls les volets en prise avec le vent sont ouverts, le dispositif perturbe peu le flux de vent passant sur ce dispositif. En particulier, le flux de vent passant sur les volets en position rétractée est très peu perturbé. Il en résulte qu'il est possible d'agencer de tels dispositifs de conversion d'énergie relativement proches les uns des autres sans nuire à leur fonctionnement.

Afin, il apparait qu'un dispositif de conversion d'énergie selon l'invention est utilisable pendant une plage de temps de plus de 4000 heures. En outre, un tel dispositif de conversion d'énergie présente une plage de fonctionnement jusqu'à un vent dont la vitesse est au moins égale à 40 m/s.

Par ailleurs, du fait que les moyens de déplacement des volets sont désactivables, il est possible de maintenir tous les volets en position fermée quelle que soit leurs positions angulaires, par exemple en cas de grands vents qui risqueraient d'endommager le dispositif.

Un dispositif de conversion d'énergie éolienne selon l'invention peut comporter en outre l'une ou plusieurs des caractéristiques suivantes, prises seules ou selon toutes combinaisons techniquement envisageables.
- Le mât présente, pour chaque module, au moins une piste de roulement circonférentielle, chaque module comprenant au moins un anneau portant des éléments de roulement complémentaires coopérant avec ladite piste de roulement.
- Chaque module comporte, pour chaque volet, un élément de support s'étendant radialement entre une extrémité intérieure solidaire de l'anneau, et une extrémité extérieure portant la liaison pivot avec le volet, les moyens de déplacement étant au moins en partie portés par cet élément de support.
- Chaque élément de support comporte aux moins deux tiges radiales de support, et une cloison portée par les tiges de support.
- Chaque cloison comporte au moins un orifice traversant.
- Chaque module comporte au moins trois éléments de support et, pour chaque élément de support, au moins une tige de renfort solidarisant cet élément de support avec l'anneau, et/ou au moins une tige de renfort solidarisant cet élément de support avec un élément de support angulairement adjacent.
- Chaque module comporte une enveloppe cylindrique, chaque volet épousant sensiblement la forme de l'enveloppe en position rétractée et s'étendant à l'écart de cette enveloppe en position déployée.
- L'enveloppe cylindrique comporte au moins une ouverture, ladite ouverture étant obturée par le volet en position rétractée, et dégagée lorsque le volet est en position déployée.
- Les moyens de déplacement comportent : un chemin de roulement, ménagé sur le mât, comportant une première partie cylindrique et une seconde partie formant une came en saillie de la partie cylindrique, et pour chaque volet : un élément de commande, s'étendant radialement entre une extrémité de roulement portant un élément de roulement coopérant avec le chemin de roulement, et une extrémité de poussée du volet, par exemple par l'intermédiaire de bielles convertissant un mouvement de translation de l'extrémité de poussée de l'élément de commande en un mouvement du volet autour de la liaison pivot entre sa position rétractée et sa position déployée, et un élément élastique de rappel de l'élément de commande contre le chemin de roulement.
- Chaque élément de commande comporte : un vérin comprenant un cylindre, portant l'extrémité de poussée, et un piston mobile dans le cylindre, le piston délimitant une chambre avec le cylindre, une tige de commande, solidarisée au piston et portant l'extrémité de roulement, et des moyens d'alimentation de la chambre en liquide sensiblement incompressible.
- La came du chemin de roulement est mobile en rotation autour de l'axe du mât, par rotation du mât autour de son axe ou par rotation de la came par rapport au mât.
- La came est escamotable, dans le prolongement de la partie cylindrique du chemin de roulement.
- Chaque volet comporte une butée élastique d'amortissement, propre à coopérer avec l'élément de support du volet lorsque le volet est en position déployée, en appliquant au volet une force élastique de rappel vers sa position rétractée.
- Le dispositif de conversion d'énergie comporte au moins deux modules, empilés axialement l'un sur l'autre, et solidaires en rotation autour de leur axe.
- Ladite énergie d'une autre nature est une énergie électrique, le convertisseur étant un générateur électrique.
- L'embase est creuse, et le convertisseur est logé dans cette embase.

L'invention sera mieux comprise à la lecture de la description qui va suivre, donnée uniquement à titre d'exemple et faite en se référant aux figures annexées parmi lesquelles :
- la figure 1 est une vue en coupe axiale d'un dispositif de conversion d'énergie éolienne selon un exemple de mode de réalisation de l'invention ;
- la figure 2 est une vue de dessus d'un module équipant le dispositif de conversion de l'énergie de la figure 1 ;
- la figure 3 est un détail du dispositif de la figure 1, représentant un élément de support équipant le module de la figure 2 ;
- la figure 4 est une vue de dessus de l'élément de support de la figure 3 ;
- la figure 5 est un détail de la figure 2, représentant des volets et des moyens de déplacement de ces volets ;
- la figure 6 est un détail de la figure 5, représentant des moyens de déplacement du volet.

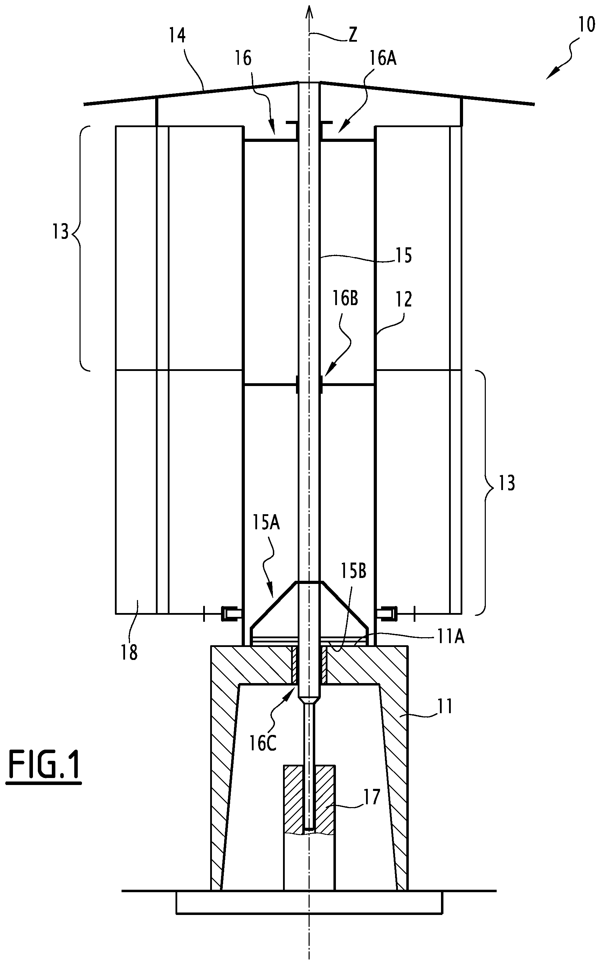

On a représenté, sur la figure 1, un dispositif 10 de conversion d'une énergie éolienne en une énergie d'une autre nature. Dans l'exemple décrit, ladite énergie d'une autre nature est une énergie électrique. Toutefois, en variante, cette énergie d'une autre nature pourrait être une énergie mécanique.

Le dispositif de conversion d'énergie 10 comporte une embase 11, et un mât creux 12 monté sur cette embase 11, et s'étendant le long d'un axe Z sensiblement vertical.

Conformément à l'exemple décrit, le mât 12 est fixé sur la structure 11. Ce mât 12 est par exemple réalisé en acier puis rapporté, en une ou plusieurs parties, sur l'embase 11. En variante, le mât 12 pourrait être réalisé en béton directement sur l'embase 11, au moyen de coffrages grimpants.

Conformément à une autre variante, le mât 12 pourrait être monté déplaçable en rotation autour de l'axe vertical Z par rapport à l'embase 11, pour des raisons qui seront décrites ultérieurement.

Le dispositif de conversion d'énergie 10 comporte au moins un module 13, de forme générale de révolution autour de l'axe vertical Z, disposé coaxialement autour du mât 12, et mobile en rotation autour de ce mât 12.

Pour des raisons de commodités, la figure 1 représente un dispositif de conversion d'énergie 10 comportant deux modules 13 empilés l'un sur l'autre dans la direction de l'axe Z. Toutefois, en variante, le dispositif de conversion d'énergie 10 pourrait comporter plus de deux modules 13, par exemple trois, quatre, ou plus de quatre modules 13, la puissance du dispositif de conversion d'énergie 10 augmentant avec le nombre de modules 13. Conformément à une autre variante, le dispositif de conversion d'énergie 10 pourrait comporter un unique module 13.

Ainsi, la hauteur et la puissance du dispositif de conversion d'énergie 10 peut être choisie à volonté lors de son montage, en adaptant la hauteur du mât 12 et le nombre de module 13 empilés autour de ce mât 12 à la hauteur souhaitée.

Les modules 13 sont solidarisés en rotation autour du mât 12. A cet effet, chaque module 13 est par exemple fixé par agrafage à chacun des modules adjacents. Ainsi, on assure une continuité mécanique entre les modules 13, ainsi que la transmission d'un couple entre ces modules 13.

L'ensemble formé par les modules 13 solidarisés entre eux est également solidaire en rotation d'un organe tournant supérieur 14. Cet organe tournant supérieur 14 est également solidaire en rotation d'un arbre 15, ledit arbre 15 s'étendant coaxialement au mât 12, à l'intérieur de ce mât 12, le long de l'axe vertical Z, depuis l'organe tournant supérieur 14 jusqu'à l'embase 11.

Avantageusement, le dispositif 10 comporte des moyens 16 de guidage en rotation de l'arbre 15.

Ces moyens 16 de guidage en rotation comportent par exemple des paliers portés par le mât 12, à l'intérieur de ce mât 12, notamment un palier supérieure 16A agencé à une extrémité supérieure de l'arbre 15, et un palier intermédiaire 16B, ou plusieurs paliers intermédiaires répartis le long de l'arbre 15, notamment le long des deux tiers inférieurs de cet arbre 15. Un palier inférieur 16C est avantageusement porté par l'embase 12, à une extrémité inférieure de l'arbre 15.

Avantageusement, l'arbre 15 comporte, à proximité de son extrémité inférieure, des moyens 15A de reprise d'une charge verticale. Ces moyens de reprise de charge 15A sont formés par une structure sensiblement conique solidaire de l'arbre 15, présentant une face inférieure 15B coopérant avec une face complémentaire 11A de l'embase, par exemple par l'intermédiaire d'un coussin de fluide (notamment d'air ou d'eau). Dans ce cas, des moyens d'injection du coussin de fluide sont prévus dans les moyens 15A de reprise de charge. En variante, la face inférieure 15B coopère avec la face complémentaire 11A par l'intermédiaire d'une butée mécanique à roulements.

Avantageusement, le dispositif 10 comporte des moyens de freinage de la rotation de l'arbre 15, par exemple intégrés dans la structure 15A de reprise de charge. En particulier, le freinage peut être réalisé par interruption des moyens d'injection du coussin de fluide, auquel cas le freinage est réalisé par frottement de la face inférieure 15B contre la face complémentaire 11A. En variante, on peut prévoir un système de freins à disques.

Lorsque les modules 13 sont entraînés en rotation autour de l'axe vertical Z par l'énergie cinétique du vent, comme cela sera décrit ultérieurement, l'élément rotatif supérieur 14 est également entraîné en rotation autour de cet axe vertical Z, ainsi que l'arbre 15. Ainsi, un couple est appliqué à cet arbre 15.

Le dispositif de conversion 10 comporte des moyens 17 de conversion de l'énergie liée à ce couple en énergie électrique, notamment un générateur électrique dont l'arbre d'entrée est solidaire de l'arbre 15.

En variante, le dispositif 10 pourrait comporter des moyens de conversion de l'énergie liée à ce couple en énergie mécanique, comprenant par exemple un système de pompage.

Avantageusement, l'embase 11 est creuse, et les moyens de conversion d'énergie 17 sont logés dans cette embase 11. Ainsi, ces moyens de conversion d'énergie 17, ainsi que des moyens de traitement de l'énergie générée par les moyens de conversion 17, comprenant par exemple des moyens de modulation électronique de l'énergie électrique générée.

Ainsi, les moyens de conversion d'énergie 17 et les moyens de traitement sont logés au niveau du sol. Leur accès est donc particulièrement aisé en cas de maintenance, contrairement à des éoliennes de l'état de la technique dans lesquelles de tels moyens de conversion d'énergie et de traitement sont logés en haut d'un mât.

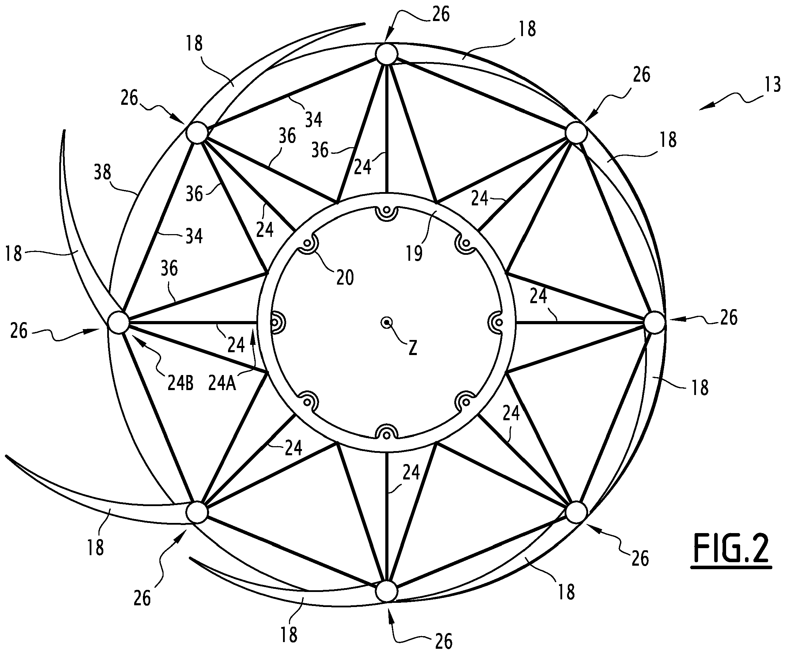

Les modules 13 du dispositif de conversion d'énergie 10 vont maintenant être décrits, en référence aux figures 2 à 4. Tous ces modules 13 étant identiques, un seul sera décrit ci-dessous en détail.

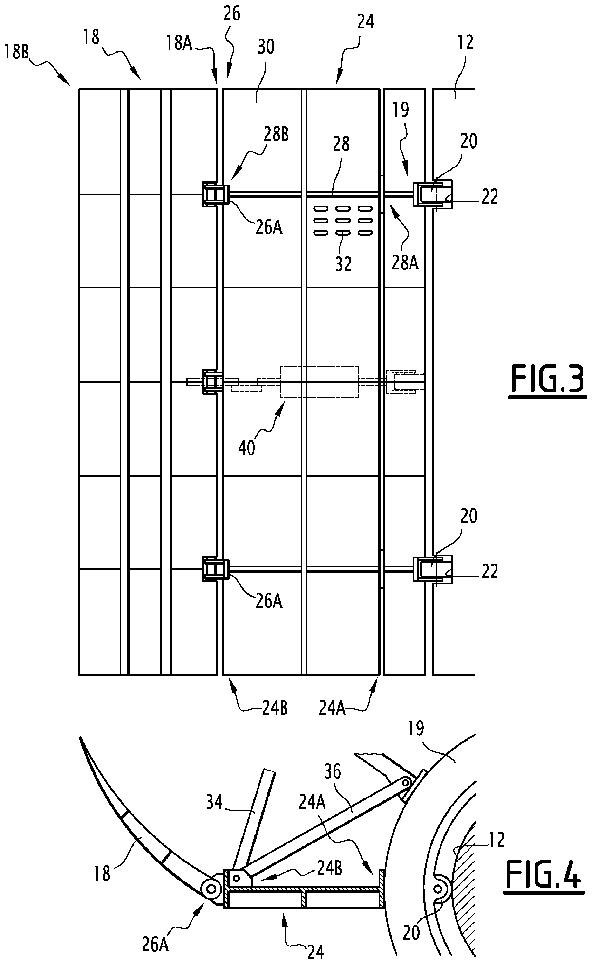

Comme cela est notamment représenté sur la figure 2, le module 13 comporte au moins un anneau intérieur 19, portant des éléments de roulement 20, par exemple quatre éléments de roulement. Chaque élément de roulement 20 est destiné à coopérer avec une piste de roulement circonférentielle complémentaire 22 (visible sur la figure3) ménagée sur une surface extérieure du mât 12.

On notera que les efforts radiaux subits par le module 13 sont repris par le mât 12, par l'intermédiaire de ces éléments de roulement 20.

Par exemple, comme cela est représenté sur la figure 3, le module 13 comporte deux anneaux 19, agencés respectivement à une extrémité supérieure et à une extrémité inférieure du module 13.

Le module 13 comporte par ailleurs au moins un élément 24 de support d'un volet 18, chaque élément de support 24 portant un volet 18 respectif. Un tel élément de support 24 est représenté sur les figures 3 et 4.

Dans l'exemple décrit, le module 13 comprend huit éléments de support 24, donc huit volets 18, répartis circonférentiellement. Ce sont ces éléments de support 24 qui sont reliés à l'organe tournant supérieur 14. Cet organe tournant supérieur 14 présente alors par exemple la forme d'une étoile à huit branches, chaque branche étant solidarisée à un élément de support 24 respectif.

Chaque élément de support 24 s'étend radialement entre une extrémité intérieure 24A solidaire des anneaux 19, et une extrémité extérieure 24B portant une liaison pivot 26 avec le volet 18 porté par cet élément de support 24.

Ainsi, chaque volet 18 s'étend entre une extrémité 18A liée par la liaison pivot 26 à son élément de support 24, et une extrémité libre 18B. Chaque volet 18 est donc déplaçable autour de la liaison pivot 26, notamment entre une position rétractée et une position déployée, qui seront décrites plus en détail par la suite.

Chaque élément de support 24 comporte au moins deux tiges radiales 28 de support, et une cloison 30 portée par ces tiges de support 28. Avantageusement, l'élément de support 24 comporte également des tiges verticales de support de la cloison 30, solidaires des tiges de support radiales 28.

Dans l'exemple décrit, chaque tige de support 28 s'étend radialement entre une extrémité intérieure 28A solidarisée à un anneau intérieur 19 respectif, et une extrémité extérieure 28B, portant un élément de charnière 26A. L'ensemble des éléments de charnière 26A forme la liaison pivot 26.

Avantageusement, chaque cloison 30 comporte au moins un, de préférence une pluralité d'orifices traversants 32, permettant au vent de passer à travers cette cloison 30 jusqu'à un cloison adjacente suivante dans la direction du vent.

Comme cela est notamment représenté sur la figure 4, le module 13 comporte des tiges de renfort 34, 36 permettant de renforcer la solidarisation des éléments de support 24 entre eux, et ainsi assurer une bonne transmission des couples autour de l'axe Z dans le module 13.

En particulier, chaque élément de support 24 est solidarisé par une tige de renfort 34 respective à chacun des éléments de support 24 angulairement adjacent. De préférence, chaque tige de renfort 34 est solidarisée aux extrémités extérieures 24B des éléments de support 24 adjacents reliés par cette tige de renfort 34.

Par ailleurs, chaque élément de support 24 est solidarisé à l'anneau 19 par deux tiges de renfort 36, s'étendant chacune depuis l'extrémité extérieure 24B de cet élément de support 24 jusqu'à l'anneau 19, ces tiges de renfort 36 étant agencées angulairement de part et d'autre de la paroi 30.

Le module 13 comporte par ailleurs une enveloppe cylindrique 38, sur laquelle le vent est susceptible de glisser sans prise de vent.

Comme indiqué précédemment, chaque volet 18 est déplaçable autour de sa liaison pivot 26 entre une position rétractée et une position déployée.

Dans sa position rétractée, chaque volet 18 épouse sensiblement la forme de l'enveloppe 38, si bien que ce volet 18 en position rétractée n'est pas en prise avec le vent.

En revanche, dans sa position déployée, chaque volet 18 s'étend à l'écart de cette enveloppe 38, si bien que ce volet 18 en position déployée est en prise avec le vent, afin de récupérer l'énergie cinétique du vent pour la convertir en un couple appliqué au module 13.

Avantageusement, l'enveloppe cylindrique 38 comporte, pour chaque volet 18, au moins une ouverture traversante. Chaque ouverture est obturée par le volet 18 correspondant lorsque ce volet 18 est en position rétractée, et dégagée lorsque le volet 18 correspondant est en position déployée. Ainsi, chaque volet 18 en position déployée guide le flux d'air du vent à travers cette ouverture, jusqu'à la cloison 30 de l'élément de support de ce volet 18, qui participe ainsi à la prise de vent.

De préférence, chaque ouverture traversante est équipée d'une trappe formant clapet, articulée sur un côté par une liaison pivot entre une position ouverte vers l'intérieur du module 13 et une position fermée. Ladite trappe est munie d'un système de ressorts repoussant la trappe vers sa position fermée. La raideur de ce système de ressorts est choisie pour fournir un effort de poussée inférieur à une force appliquée par le flux de vent sur la trappe. Ainsi, cette trappe laisse passer le flux de vent dans un seul sens, vers l'intérieur du module 13. En outre, la trappe reste fermée lorsque le volet 18 est en position rétractée.

Comme indiqué précédemment, les cloisons 30 comportent de préférence les orifices 32, si bien que le flux d'air passant à travers ces orifices 32 est susceptible de se retrouver en prise avec la cloison 30 adjacente suivante dans la direction du vent, ce qui augmente ainsi encore la surface de parois en prise avec le vent.

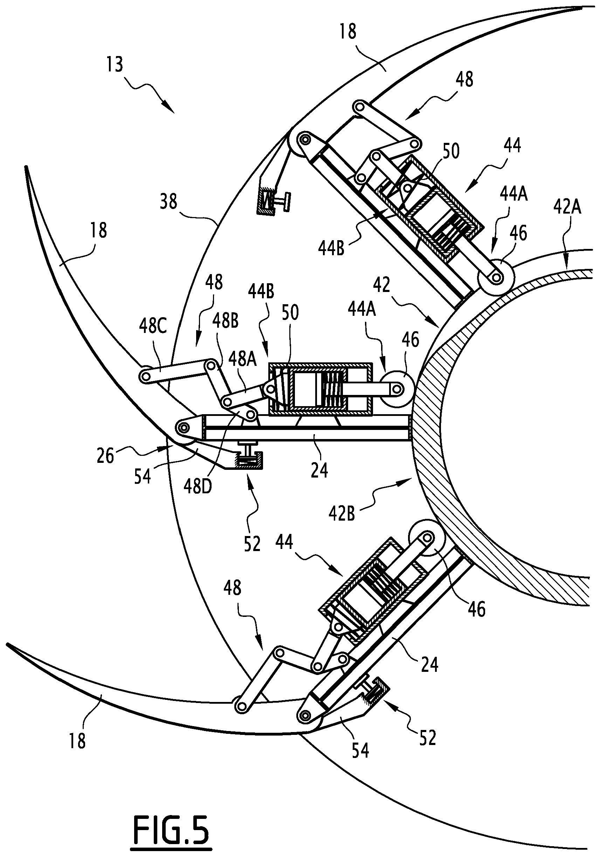

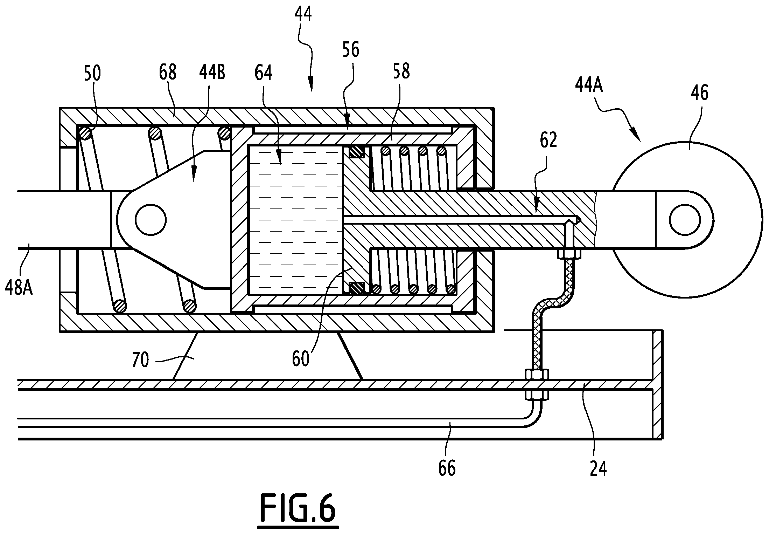

Pour un rendement optimal du dispositif de conversion d'énergie 10, on prévoit de passer les volets 18 en position déployée lorsqu'ils sont en prise avec le vent, et en position rétractée lorsqu'ils sont en opposition du sens du vent. A cet effet, le module 13 comporte, pour chaque volet 18, des moyens 40 de déplacement de ce volet 18 entre sa position déployée et sa position rétractée, en fonction de la position angulaire de ce volet 18 autour du mât 12. Ces moyens de déplacement 40 sont représentés plus en détail sur les figures 5 et 6.

Les moyens de déplacement 40 comportent, d'une part, un chemin de roulement 42, ménagé sur une surface extérieure du mât 12, comportant une première partie cylindrique 42A et une seconde partie 42B formant une came, en saillie radiale de la première partie 42A. Ainsi, la distance radiale entre l'axe vertical Z et tout point de la première partie cylindrique 42A est constante. En revanche, la distance radiale entre l'axe vertical Z et tout point de la came 42B est supérieure à la distance radiale entre l'axe vertical Z et tout point de la première partie cylindrique 42A.

Les moyens de déplacement 40 comportent, d'autre part, pour chaque volet 18, un élément de commande 44, s'étendant radialement entre une extrémité de roulement 44A, portant un élément de roulement 46, notamment un galet, coopérant avec le chemin de roulement 42, et une extrémité 44B de poussée du volet 18.

Par exemple, l'extrémité de poussée 44B est propre à pousser le volet 18 par l'intermédiaire d'un ensemble de bielles 48 disposées pour convertir un mouvement de translation de l'extrémité de poussée 44B de l'élément de commande 44, en un mouvement du volet 18 autour de la liaison pivot 26 entre la position rétractée et la position déployée.

En particulier, dans l'exemple représenté, l'ensemble de bielle 48 comporte des première 48A, deuxième 48B et troisième 48C bielles, agencées de la manière suivante. La première bielle 48A s'étend entre une liaison pivot avec l'extrémité de poussée 44B et une liaison pivot avec la deuxième bielle 48B. La deuxième bielle 48B comporte une première partie s'étendant entre la liaison pivot avec la première bielle 48A et une liaison pivot avec la troisième bielle 48C. La troisième bielle 48C s'étend entre la liaison pivot avec la deuxième bielle 48B et une liaison pivot avec le volet 18.

Enfin, la deuxième bielle 48B comporte une deuxième partie, désignée par la référence 48D, solidaire de la première partie, prolongeant cette première partie depuis la liaison pivot avec la première bielle 48A jusqu'à une liaison pivot avec l'élément de support 24. Ainsi, cette deuxième bielle 48B, notamment sa deuxième partie 48D, participe à la stabilisation de l'ensemble de bielles 48.

Bien entendu, on pourra prévoir tout autre arrangement de bielles, ou d'autres moyens pour convertir le mouvement de translation de l'élément de commande 44 en un mouvement du volet 18 autour de la liaison pivot 26.

L'élément de commande 44 comporte par ailleurs un élément élastique 50 de rappel de cet élément de commande 44 contre le chemin de roulement 42. Cet élément élastique de rappel 50 permet à l'élément de roulement 46 de rester en contact avec le chemin 42, notamment lors du passage depuis la came 42B jusqu'à la partie cylindrique 42A. En d'autres termes, cet élément élastique de rappel 50 permet d'écarter l'élément de commande 44 du volet 18 lorsque l'élément de roulement 46 passe sur la partie cylindrique 42A, entraînant ainsi le déplacement du volet 18 vers sa position rétractée.

On notera que la raideur de cet organe élastique 50 est choisie pour permettre ce rappel du volet 18 vers sa position rétractée, mais ne doit pas être trop importante pour ne pas s'opposer au déplacement du volet 18 vers sa position déployée.

Lorsque l'élément de roulement 46 est en contact avec la partie cylindrique 42A du chemin de roulement 42, l'élément de commande 44, notamment son extrémité de poussée 44B, est disposée à l'écart du volet 18, si bien que ce volet 18 se trouve en position rétractée.

En revanche, lorsque l'élément de roulement 46 passe sur la came 42B, l'extrémité de poussée 44B de l'élément de commande 44 est poussée en translation en direction du volet 18, et pousse donc ce volet 18 vers sa position déployée, par l'intermédiaire de l'ensemble de bielles 48.

Avantageusement, chaque volet 18 porte une butée élastique d'amortissement 52, propre à coopérer avec l'élément de support 24 du volet 18 lorsque ce volet 18 est dans sa position déployée, en appliquant à ce volet 18, une force élastique de rappel vers sa position rétractée. Cette butée d'amortissement 52 permet d'éviter une ouverture trop brutale du volet 18 jusqu'à sa position déployée.

Conformément à l'exemple décrit, cette butée élastique d'amortissement 52 est disposée sur un bras 54 prolongeant intérieurement le volet 18 au-delà de la liaison pivot 26, comme cela est représenté sur la figure 5. Cette butée élastique 52 permet également d'amorcer le déplacement du volet 18 depuis sa position déployée jusqu'à sa position rétractée lorsque l'élément de roulement 46 passe depuis la came 42B jusqu'à la partie cylindrique 42A du chemin de roulement 42.

On notera que la came 42B est avantageusement indexée autour du mât 12 en fonction de la direction du vent. En effet, pour un rendement optimal, les volets 18 doivent passer en position déployée sensiblement perpendiculairement à la direction du vent, dans le sens du vent, et passer en position rétractée autrement.

Ainsi, le chemin de roulement 42 est monté rotatif autour de l'axe Z, ce qui permet de régler la position angulaire de la came 42B en fonction de la direction du vent. On notera que la direction du vent peut être obtenue par tout moyen classique, par exemple une girouette ou une manche à air.

Par exemple, le chemin de roulement 42 est porté par une couronne entourant le mât, déplaçable en rotation autour de ce mât 12, par exemple au moyen d'un système d'engrenages. Avantageusement, ce système d'engrenages est commandable depuis l'embase 11, qui loge donc des moyens adaptés de commande.

En variante, de préférence dans le cas d'un dispositif de conversion d'énergie 10 ne comportant qu'un ou deux modules 13, le chemin de roulement 52 peut être solidaire du mât 12, auquel cas ce mât 12 est monté mobile en rotation autour de son axe par rapport à l'embase 11, comme cela a été évoqué précédemment. Avantageusement, la rotation du mât 12 est commandable depuis l'embase 11, qui loge donc des moyens adaptés de commande.

Dans certaines circonstances, notamment en cas de vent particulièrement fort, ou en cas de maintenance, il peut être préférable de maintenir les volets 18 en position rétractée. A cet effet, les moyens de déplacement 40 sont avantageusement désactivables.

Conformément à l'exemple représenté, notamment sur la figure 6, chaque élément de commande 44 comporte :
- un vérin 56 comprenant un cylindre 58 portant l'extrémité de poussée 44B, et un piston 60 mobile dans le cylindre 58, et
- une tige de commande 62, portant l'extrémité de roulement 44A, solidarisée au piston 60.

Le piston 60 délimite, avec le cylindre 58, une chambre 64 à proximité de l'extrémité de poussée 44B. L'élément de commande 44 comporte en outre un dispositif 66 d'alimentation de cette chambre 64 en liquide incompressible, par exemple en huile. Ainsi, il est possible de modifier la longueur de l'élément de commande 44 en modifiant le volume de la chambre 64, en injectant du liquide dans cette chambre 64, ou en extrayant du liquide de cette chambre 64.

Afin d'activer les moyens de déplacement 40, la chambre 64 est remplie de liquide de sorte que la longueur de l'élément de commande 44 est maximale, et l'alimentation 66 est fermée pour que la chambre 64 conserve ce volume. Dans ce cas, cet élément de commande 44 transmet les déplacements radiaux de l'élément de roulement 46 sur le chemin de roulement 42, jusqu'à l'extrémité de poussée 44B de l'élément de commande 44, donc jusqu'au volet 18.

Afin de désactiver les moyens de déplacement 40, l'alimentation 66 est ouverte, de sorte que tout déplacement du piston 60 modifie le volume de la chambre 64, donc la longueur de l'élément de commande 44. En d'autres termes, le piston 60 peut se déplacer librement dans le cylindre 58 sans que ce cylindre 58 ne soit entraîné en translation. Ainsi, lorsque l'élément de roulement 46 passe depuis la partie cylindrique 42A jusqu'à la came 42B du chemin de roulement 42, la tige 62 pousse le vérin 60 dans le cylindre 58 en étant aidé par un ressort hélicoïdal agencé autour de la tige, entre un siège ménagé sur le vérin 60 et un siège formé par une butée du cylindre 58, mais ce cylindre 58 reste immobile, ainsi que l'extrémité de poussée 44B, si bien que le volet 18 reste en position rétractée.

Avantageusement, les moyens de déplacement 40 comprennent un élément 68 de guidage du cylindre 58 en translation, par exemple formé par un cylindre dont le diamètre intérieur est légèrement supérieur au diamètre extérieur du cylindre 58. Cet élément de guidage 68 est fixé à l'élément de support 24 par des moyens de solidarisation 70, de tout type envisageable.

Dans ce cas, l'organe élastique 50 de rappel de l'élément de commande 44 s'étend entre un premier siège ménagé sur le cylindre 58 et un second siège formé par une butée ménagée sur l'élément de guidage 68, notamment à l'intérieur de cet élément de guidage 68.

La désactivation des moyens de déplacement 40 peut être réalisée par d'autres moyens, en variante ou en complément de ceux décrits précédemment. En particulier, les moyens de déplacement 40 peuvent être désactivés en escamotant la came 42B, dans le prolongement de la partie cylindrique 42A du chemin de roulement 42. Ainsi, l'élément de commande 44 n'est plus poussé vers le volet par cette came 42B, si bien que le volet demeure en position rétractée.

La rétractation de la came 42B peut être réalisée par tout moyen envisageable. Par exemple, la came 42B est reliée à la couronne portant le chemin de roulement 42 par une liaison pivot, et déplaçable autour de cette liaison pivot entre une position en saillie et une position escamotée, ces positions en saillie et escamotée étant délimitées par des butées ménagées sur la couronne.

La couronne comporte en outre un élément de poussée interne, propre à pousser la came 42B jusqu'à sa position en saillie, ou à relâcher cette came 42B. Lorsqu'elle est relâchée, la came 42B peut être rappelée en position escamotée par un organe élastique, ou laissée libre pour être repoussée par l'élément de commande 44 jusqu'à la position escamotée lorsque cet élément de commande 44 passe sur cette came 42B.

On notera que l'invention n'est pas limitée au mode de réalisation précédemment décrit, mais pourrait présenter diverses variantes sans sortir du cadre des revendications.

En particulier, on pourrait prévoir des moyens supplémentaires hydrauliques ou pneumatiques pour améliorer le contrôle du déplacement des volets 18.

## Revendications

1. Dispositif (10) de conversion d'énergie éolienne en une énergie d'une autre nature, le dispositif comportant :
- une embase (11),
- un mât creux (12), monté sur l'embase (12), s'étendant le long d'un axe (Z) sensiblement vertical,
- au moins un module (13) de forme générale de révolution autour d'un axe (Z), disposé coaxialement autour du mât (12), et mobile en rotation autour de ce mât (12), ledit module (13) comprenant :
∘ au moins un volet (18) s'étendant entre une extrémité (18A) liée par une liaison pivot (26), et une extrémité libre (18B), ledit volet (18) étant déplaçable autour de la liaison pivot (26) entre une position rétractée et une position déployée,
∘ des moyens (40) de déplacement du volet (18) entre ses positions déployée et rétractée, en fonction de la position angulaire de ce volet (18) autour du mât (12), lesdits moyens de déplacement (40) étant désactivables,
- un arbre (15), disposé dans le mât creux (12) coaxialement au module (13), lié en rotation avec ce module (13) autour dudit axe (Z), et coopérant avec un convertisseur (17) de l'énergie mécanique de rotation de l'arbre (15) en ladite énergie de l'autre nature.

2. Dispositif de conversion d'énergie éolienne (10) selon la revendication 1, dans lequel le mât (12) présente, pour chaque module (13), au moins une piste de roulement circonférentielle (22), chaque module (13) comprenant au moins un anneau (19) portant des éléments de roulement (20) complémentaires coopérant avec ladite piste de roulement (22).

3. Dispositif de conversion d'énergie éolienne (10) selon la revendication 2, dans lequel chaque module (13) comporte, pour chaque volet (18), un élément de support (24) s'étendant radialement entre une extrémité intérieure (24A) solidaire de l'anneau (19), et une extrémité extérieure (24B) portant la liaison pivot (26) avec le volet (18), les moyens de déplacement (40) étant au moins en partie portés par cet élément de support (24).

4. Dispositif de conversion d'énergie éolienne (10) selon la revendication 3, dans lequel chaque élément de support (24) comporte aux moins deux tiges radiales de support (28), et une cloison (30) portée par les tiges de support (28).

5. Dispositif de conversion d'énergie éolienne (10) selon la revendication 4, dans lequel chaque cloison (30) comporte au moins un orifice traversant (32).

6. Dispositif de conversion d'énergie éolienne (10) selon l'une quelconque des revendications 3 à 5, dans lequel chaque module (13) comporte au moins trois éléments de support (24) et, pour chaque élément de support (24), au moins une tige de renfort (36) solidarisant cet élément de support avec l'anneau (19), et/ou au moins une tige de renfort (34) solidarisant cet élément de support (24) avec un élément de support angulairement adjacent.

7. Dispositif de conversion d'énergie éolienne (10) selon l'une quelconque des revendications précédentes, dans lequel chaque module (13) comporte une enveloppe cylindrique (38), chaque volet (18) épousant sensiblement la forme de l'enveloppe (38) en position rétractée et s'étendant à l'écart de cette enveloppe (38) en position déployée.

8. Dispositif de conversion d'énergie éolienne (10) selon la revendication 7, dans lequel l'enveloppe cylindrique (38) comporte au moins une ouverture, ladite ouverture étant obturée par le volet (18) en position rétractée, et dégagée lorsque le volet (18) est en position déployée.

9. Dispositif de conversion d'énergie éolienne (10) selon l'une quelconque des revendications précédentes, dans lequel les moyens de déplacement (40) comportent :
- un chemin de roulement (42), ménagé sur le mât (12), comportant une première partie cylindrique (42A) et une seconde partie formant une came (42B) en saillie de la partie cylindrique (42A), et
- pour chaque volet (18) :
∘ un élément de commande (44), s'étendant radialement entre une extrémité de roulement (44A) portant un élément de roulement (46) coopérant avec le chemin de roulement (42), et une extrémité (44B) de poussée du volet (18), par exemple par l'intermédiaire de bielles (48) convertissant un mouvement de translation de l'extrémité de poussée (44B) de l'élément de commande (44) en un mouvement du volet (18) autour de la liaison pivot (26) entre sa position rétractée et sa position déployée
∘ un élément élastique (50) de rappel de l'élément de commande (44) contre le chemin de roulement (42).

10. Dispositif de conversion d'énergie éolienne (10) selon la revendication 9, dans lequel chaque élément de commande (44) comporte :
- un vérin (56) comprenant un cylindre (58), portant l'extrémité de poussée (44B), et un piston (60) mobile dans le cylindre (58), le piston (60) délimitant une chambre (64) avec le cylindre,
- une tige de commande (62), solidarisée au piston (60) et portant l'extrémité de roulement (44A), et
- des moyens (66) d'alimentation de la chambre (64) en liquide sensiblement incompressible.

11. Dispositif de conversion d'énergie éolienne (10) selon la revendication 9 ou 10, dans lequel la came (42B) du chemin de roulement (42) est mobile en rotation autour de l'axe (Z) du mât (12), par rotation du mât (12) autour de son axe (Z) ou par rotation de la came (42B) par rapport au mât (12).

12. Dispositif de conversion d'énergie éolienne (10) selon l'une quelconque des revendications 9 à 11, dans lequel la came (42B) est escamotable, dans le prolongement de la partie cylindrique (42A) du chemin de roulement (42).

13. Dispositif de conversion d'énergie éolienne (10) selon l'une quelconque des revendications précédentes, dans lequel chaque volet (18) comporte une butée élastique d'amortissement (52), propre à coopérer avec l'élément de support (24) du volet (18) lorsque le volet (18) est en position déployée, en appliquant au volet (18) une force élastique de rappel vers sa position rétractée.

14. Dispositif de conversion d'énergie éolienne (10) selon l'une quelconque des revendications précédentes, comportant au moins deux modules (13), empilés axialement l'un sur l'autre, et solidaires en rotation autour de leur axe (Z).

15. Dispositif de conversion d'énergie éolienne (10) selon l'une quelconque des revendications précédentes, dans lequel ladite énergie d'une autre nature est une énergie électrique, le convertisseur (17) étant un générateur électrique.

16. Dispositif de conversion d'énergie éolienne (10) selon l'une quelconque des revendications précédentes, dans lequel l'embase (11) est creuse, et le convertisseur (17) est logé dans cette embase (11).

## Patentansprüche

1. Vorrichtung (10) zur Umwandlung von Windenergie in eine Energie einer anderen Art, wobei die Vorrichtung aufweist:
- einen Sockel (11),
- einen hohlen Mast (12), der auf den Sockel (12) montiert ist und sich entlang einer im Wesentlichen vertikalen Achse (Z) erstreckt,
- wenigstens ein Modul (13) einer allgemeinen Dreh-Form um eine Achse (Z) herum, welches koaxial um den Mast (12) herum angeordnet ist und um diesen Mast (12) herum drehbewegbar ist, wobei das Modul (13) aufweist:
∘ wenigstens eine Klappe (18), die sich zwischen einem über ein Verbindungsgelenk (26) verbundenen Ende (18A) und einem freien Ende (18B) erstreckt, wobei die Klappe (18) um das Verbindungsgelenk (26) herum verlagerbar ist zwischen einer Eingefahren-Position und einer Ausgefahren-Position,
∘ Mittel (40) zur Verlagerung der Klappe (18) zwischen deren Eingefahren-Position und deren Ausgefahren-Position in Abhängigkeit von der Winkelposition dieser Klappe (18) um den Masten (12) herum, wobei die besagten Mittel zur Verlagerung (40) desaktivierbar sind,
- eine Welle (15), die in dem hohlen Mast (12) koaxial zu dem Modul (13) angeordnet ist, mit diesem Modul (13) um die besagte Achse (Z) herum drehverbunden ist und zusammenwirkt mit einem Konverter (17) der mechanischen Drehenergie der Welle (15) in die besagte Energie der anderen Art.

2. Vorrichtung zur Umwandlung von Windenergie (10) gemäß Anspruch 1, wobei der Mast (12) für jedes Modul (13) wenigstens eine umfängliche Rollbahn (22) hat, wobei jedes Modul (13) wenigstens einen Ring (19) aufweist, der komplementäre Rollelemente (20) trägt, die mit der besagten Rollbahn (22) zusammenwirken.

3. Vorrichtung zur Umwandlung von Windenergie (10) gemäß Anspruch 2, wobei jedes Modul (13) für jede Klappe (18) ein Halteelement (24) aufweist, das sich radial zwischen einem inneren Ende (24A), das fest mit dem Ring (19) verbunden ist, und einem äußeren Ende (24B) erstreckt, das das Verbindungsgelenk (26) mit der Klappe (18) trägt, wobei die Mittel zur Verlagerung (40) zumindest teilweise von diesem Halteelement (24) getragen werden.

4. Vorrichtung zur Umwandlung von Windenergie (10) gemäß dem Anspruch 3, wobei jedes Halteelement (24) wenigstens zwei radiale Haltestangen (28) und eine Wand (30) aufweist, die von den Haltestangen (28) getragen wird.

5. Vorrichtung zur Umwandlung von Windenergie (10) gemäß Anspruch 4, wobei jede Wand (30) wenigstens eine Durchgangsöffnung (32) aufweist.

6. Vorrichtung zur Umwandlung von Windenergie (10) gemäß irgendeinem der Ansprüche 3 bis 5, wobei jedes Modul (13) aufweist wenigstens drei Halteelemente (24) und für jedes Halteelement (24) wenigstens eine Verstärkungsstange (36), die dieses Haltelement mit dem Ring (19) fest verbindet, und/oder wenigstens eine Verstärkungsstange (34), die dieses Halteelement (24) mit einem winkelbenachbarten Halteelement fest verbindet.

7. Vorrichtung zur Umwandlung von Windenergie (10) gemäß irgendeinem der vorhergehenden Ansprüche, wobei jedes Modul (13) eine zylindrische Hülle (38) aufweist, wobei sich jede Klappe (18) in der Eingefahren-Position im Wesentlichen an die Form der Hülle (38) anschmiegt und sich in der Ausgefahren-Position von der Hülle (38) wegerstreckt.

8. Vorrichtung zur Umwandlung von Windenergie (10) gemäß Anspruch 7, wobei die zylindrische Hülle (38) wenigstens eine Öffnung aufweist, wobei die besagte Öffnung in der Eingefahren-Position von der Klappe (18) versperrt ist und freigelegt ist, wenn die Klappe (18) in der Ausgefahren-Position ist.

9. Vorrichtung zur Umwandlung von Windenergie (10) gemäß irgendeinem der vorhergehenden Ansprüche, wobei die Mittel zur Verlagerung (40) aufweisen:
- eine Rollbahn (42), die an dem Mast (12) vorgesehen ist und aufweist einen ersten, zylindrischen Abschnitt (42A) und einen zweiten Abschnitt, der eine Nocke (42B) bildet, die von dem zylindrischen Abschnitt (42A) aus vorsteht, und
- für jede Klappe (18):
∘ ein Steuerelement (44), das sich radial erstreckt zwischen einem Rollende (44A), das ein Rollelement (46) trägt, das mit der Rollbahn (42) zusammenwirkt, und einem Ende (44B) zum Drücken der Klappe (18), z.B. über die Zwischenschaltung von Stangen (48), die eine Translationsbewegung des Endes zum Drücken (44B) des Steuerelements (44) in eine Bewegung der Klappe (18) um das Verbindungsgelenk (26) herum zwischen deren Eingefahren-Position und deren Ausgefahren-Position umwandeln,
∘ ein elastisches Element (50) zum Rückstellen des Steuerelements (44) gegen die Rollbahn (42).

10. Vorrichtung zur Umwandlung von Windenergie (10) gemäß Anspruch 9, wobei jedes Steuerelement (44) aufweist:
- einen Hubzylinder (56) mit einem Zylinder (58), der das Ende zum Drücken (44B) trägt, und einem Kolben (60), der in dem Zylinder (58) bewegbar ist, wobei der Kolben (60) mit dem Zylinder eine Kammer (64) begrenzt,
- eine Steuerstange (62), die fest mit dem Kolben (60) verbunden ist und das Rollende (44A) trägt, und
- Mittel (66) zur Versorgung der Kammer (64) mit im Wesentlichen inkompressibler Flüssigkeit.

11. Vorrichtung zur Umwandlung von Windenergie (10) gemäß Anspruch 9 oder 10, wobei die Nocke (42B) der Rollbahn (42) rotationsbewegbar ist um die Achse (Z) des Masts (12) via Rotation des Masts (12) um dessen Achse (Z) oder via Rotation der Nocke (42B) bezüglich des Masts (12).

12. Vorrichtung zur Umwandlung von Windenergie (10) gemäß irgendeinem der Ansprüche 9 bis 11, wobei die Nocke (42B) einfahrbar ist in der Verlängerung des zylindrischen Abschnitts (42A) der Rollbahn (42).

13. Vorrichtung zur Umwandlung von Windenergie (10) gemäß irgendeinem der vorhergehenden Ansprüche, wobei jede Klappe (18) einen elastischen Dämpfer-Anschlag (52) aufweist, der imstande ist mit dem Halteelement (24) der Klappe (18) zusammenzuwirken, wenn die Klappe (18) in der Ausgefahren-Position ist, unter Aufbringen einer Elastik-Rückstellkraft auf die Klappe (18) zu deren Eingefahren-Position hin.

14. Vorrichtung zur Umwandlung von Windenergie (10) gemäß irgendeinem der vorhergehenden Ansprüche, aufweisend wenigstens zwei Module (13), die axial aufeinander gestapelt sind und die um ihre Achse (Z) herum drehfest verbunden sind.

15. Vorrichtung zur Umwandlung von Windenergie (10) gemäß irgendeinem der vorhergehenden Ansprüche, wobei die besagte Energie einer anderen Art elektrische Energie ist, wobei der Konverter (17) ein elektrischer Generator ist.

16. Vorrichtung zur Umwandlung von Windenergie (10) gemäß irgendeinem der vorhergehenden Ansprüche, wobei der besagte Sockel (11) hohl ist und der Konverter (17) in diesem Sockel (11) untergebracht ist.

## Claims

1. A device (10) for converting wind energy into energy of another type, the device comprising:
- a base (11),
- a hollow mast (12), mounted on the base (12), extending along a substantially vertical axis (Z),
- at least one module (13) with a general shape of revolution around an axis (Z), positioned coaxially around the mast (12), and movable in rotation around that mast (12), said module (13) comprising:
∘ at least one flap (18) extending between an end (18A) connected by a pivot link (26), and a free end (18B), said flap (18) being movable around the pivot link (26) between a retracted position and a deployed position,
∘ means (40) for moving the flap (18) between its deployed and retracted positions, based on the angular position of that flap (18) around the mast (12), said movement means (40) being able to be deactivated,
- a shaft (15), positioned in the hollow mast (12) coaxially to the module (13), connected in rotation with that module (13) around the axis (Z), and cooperating with a converter (17) converting the mechanical rotational energy of the shaft (15) into another type of energy.

2. The device (10) for converting wind energy according to claim 1, wherein the mast (12) has at least one circumferential rolling track (22) for each module (13), each module (13) comprising at least one ring (19) supporting complementary rolling elements (20) cooperating with said rolling track (22).

3. The device (10) for converting wind energy according to claim 2, wherein each module (13) comprises, for each flap (18), a support element (24) extending radially between an inner end (24A) secured to the ring (19) and an outer end (24B) supporting the pivot link (26) with the flap (18), the movement means (40) being at least partially supported by that support element (24).

4. The device (10) for converting wind energy according to claim 3, wherein each support element (24) comprises at least two radial support rods (28), and a partition (30) supported by the support rods (28).

5. The device (10) for converting wind energy according to claim 4, wherein each partition (30) comprises at least one through orifice (32).

6. The device (10) for converting wind energy according to any one of claims 3 to 5, wherein each module (13) comprises at least three support elements (24) and, for each support element (24), at least one reinforcing rod (36) securing that support element to the ring (19), and/or at least one reinforcing rod (34) securing the support element (24) with an angularly adjacent support element.

7. The device (10) for converting wind energy according to any one of the preceding claims, wherein each module (13) comprises a cylindrical enclosure (38), each flap (18) substantially hugging the shape of the enclosure (38) in the retracted position and extending away from the enclosure (38) in the deployed position.

8. The device (10) for converting wind energy according to claim 7, wherein the cylindrical enclosure (38) comprises at least one opening, said opening being closed off by the flap (18) in the retracted position, and freed when the flap (18) is in the deployed position.

9. The device (10) for converting wind energy according to any one of the preceding claims, wherein the movement means (40) comprise:
- a rolling path (42), arranged on the mast (12), comprising a first cylindrical part (42A) and a second cylindrical part forming a cam (42B), protruding radially from the first part (42A), and
- for each flap (18):
∘ a control element (44), extending radially between a rolling end (44A) supporting a rolling element (46) cooperating with the rolling path (42), and an end (44B) pushing the flap (18), for example by means of connecting rods (48) converting a translational movement from the thrust end (44B) of the control element (44) into a movement of the flap (18) around the pivot link (26) between its retracted position and its deployed position,
∘ an elastic element (50) returning the control element (44) against the rolling path (42).

10. The device (10) for converting wind energy according to claim 9, wherein each control element (44) comprises:
- a jack (56) comprising a cylinder (58) supporting the first end (44B), and a piston (60) movable in the cylinder (58), the piston (60) delimiting a chamber (64) with the cylinder,
- a control rod (62), secured to the piston (60) and supporting the rolling end (44A), and
- means (66) for supplying the chamber (64) with a substantially incompressible liquid.

11. The device (10) for converting wind energy according to claim 9 or 10, wherein the cam (42B) of the rolling path (42) is rotatable around the axis (Z) of the mast (12), by rotating the mast (12) around its axis (Z) or by rotating the cam (42B) relative to the mast (12).

12. The device (10) for converting wind energy according to any one of claims 9 to 11, wherein the cam (42B) is retractable, in the extension of the cylindrical part (42A) of the rolling path (42).

13. The device (10) for converting wind energy according to any one of the preceding claims, wherein each flap (18) supports an elastic damping stop (52), able to cooperate with the support element (24) of the flap (18) when that flap (18) is in its deployed position, by applying an elastic return force on that flap (18) returning it toward its retracted position.

14. The device (10) for converting wind energy according to any one of the preceding claims, comprising at least two modules (13), stacked axially on one another, and secured in rotation around their axis (Z).

15. The device (10) for converting wind energy according to any one of the preceding claims, wherein said energy of another type is an electrical energy, the converter (17) being an electrical generator.

16. The device (10) for converting wind energy according to any one of the preceding claims, wherein the base (11) is hollow, and the converter (17) is housed in that base (11).
